# EUROPÄISCHE PATENTSCHRIFT

(11) **EP 3 715 022 B1**
(45) Veröffentlichungstag und Bekanntmachung des Hinweises auf die Patenterteilung: **07.06.2023**
(21) Anmeldenummer: 20163609.9
(22) Anmeldetag: 17.03.2020
(51) Int. Cl.: B22F 5/00, B22F 7/06, B22F 7/08, B22F 10/28, B22F 12/30, B29C 64/153, B29C 64/245, B29C 64/40, B33Y 10/00, B33Y 30/00, F04D 29/22, F04D 29/28

(54) **VERFAHREN ZUR ADDIVITVEN FERTIGUNG EINES BAUTEILS**
PROCESS FOR ADDITIVE MANUFACTURING A COMPONENT
PROCÉDÉ POUR LA FABRICATION ADDITIVE D'UN COMPOSANT

(30) Priorität: 29.03.2019 DE 102019002292
(43) Veröffentlichungstag der Anmeldung: 30.09.2020
(73) Patentinhaber: KSB SE & Co. KGaA, 67227 Frankenthal (DE)
(72) Erfinder: Buthmann, Lukas, 67227 Frankenthal (DE)

(56) Entgegenhaltungen:
- DE-A1-102008 012 063
- DE-A1-102008 012 064
- DE-A1-102015 010 388
- RU-C1- 2 682 734
- US-A1- 2016 067 923
- US-A1- 2017 291 260

## Beschreibung

Die Erfindung betrifft ein Laserschmelzverfahren nach Anspruch 1.

Im Stand der Technik sind unterschiedliche Verfahren zur additiven Fertigung von Bauteilen bekannt geworden.

Beispielsweise wird im Rahmen des selektiven Lasermelting (SLM) eine wiederholte chronologisch gestaffelte Ausführung der folgenden Schritte durchgeführt: (a) Auftragung einer Schicht eines rieselfähigen Pulvers von einem Reservoir auf eine Grundplatte oder auf eine darunterliegende Schicht des Pulvers auf der Plattform; und (b) Laserbestrahlung des Pulvers der in Schritt (a) aufgetragenen Schicht entlang eines vorgegebenen Verlaufs, der einer Schnittkontur des Bauteils entspricht, um das Pulver in diesem Bereich miteinander zu verbinden. Bei dem Pulver handelt es sich um metallische Pulver oder Granulate, die durch die Laserbestrahlung verschmolzen werden. Nach Fertigstellung wird das Bauteil von der Grundplattform geschnitten / getrennt und nach- / bzw. fertigbearbeitet.

Die RU 2 682 734 C1 offenbart ein Verfahren, bei dem Bauteile mittels einem 3D-Druckverfahren hergestellt werden und anschließend zusammengefügt werden, wobei sie mittels Presspassung relativ zueinander fixiert werden.

Aus der DE 10 2015 010 388 A1 ist ein Verfahren zur Herstellung eines Laufrades für eine Strömungsmaschine durch additives Laserauftragsschmelzen oder - sintern von auf eine Bauplattform aufgetragenen Pulverschichten bekannt, wobei zunächst ein Bauteil mithilfe einer Stützstruktur hergestellt wird und anschließend, nach dem Entfernen der Stützstruktur weitere Elemente an dem Bauteil aufgebaut werden.

Nachteile des Verfahrens sind, dass komplexe Strukturen und insbesondere Überhänge bzw. Hinterschneidungen in den Bauteilen nicht bzw. nur unter Verwendung von Stützstrukturen, welche nach dem Bauprozess teilweise schwer oder nicht zu entfernen sind, realisiert werden können. Zudem stellt die Entfernung der Bauteile von der Plattform einen zusätzlichen komplexen Arbeitsschritt dar, der die Bauzeit bzw. Nachbearbeitungszeit erhöht.

Die US 2017/0291260 A1 beschreibt ein additives Herstellungsverfahren zum Herstellen eines achsensymmetrischen Teils. Dabei wird eine Vorrichtung bereitgestellt, die ein Gefäß mit einem Pulver enthält, wobei ein Werkstück drehbar in dem Gefäß gelagert ist. Das Werkstück weist einen Dorn auf, der als Achse zum Drehen des Werkstücks dient. Üblicherweise wird der Dorn nach der Herstellung des Werkstücks wieder entfernt, was ein zusätzlicher Arbeitsschritt bedeutet.

Aus der DE 10 2008 012 064 A1 ist Verfahren bekannt, dass zur Herstellung eines mittels eines Hybridverfahrens hergestellten Hybridformteils angewendet wird, wobei das Hybridformteil bereichsweise als spanabhebend oder gießtechnisch vorgefertigter Grundkörper ausgebildet ist und bereichsweise aus einem durch ein Laserschmelzverfahren hergestellten Abschnitt besteht, der generativ auf eine Oberfläche des Grundkörpers aufgebaut ist, wozu lagenweise Pulvermaterial auf die Oberfläche des Grundkörpers oder auf bereits verfestigtes Pulvermaterial aufgetragen wird und durch Einwirkung von Strahlungsenergie bereichsweise aufgeschmolzen wird, um nach Verfestigung den Abschnitt oder den Teil des Abschnitts oder einen Teil davon zu bilden. Nach zumindest teilweisen Aufbau des generativ hergestellten Abschnittes auf die Oberfläche wird der Grundkörper gedreht und auf eine zweite Fläche ein weiterer generativ hergestellter Abschnitt aufgebaut.

Die DE 10 2008 012 063 A1 beschreibt im Wesentlichen das gleiche Verfahren, insbesondere jedoch ein Verfahren zur Herstellung eines gewölbten.

Ein weiteres additives Herstellverfahren wird in der US 2016/0067923 A1 offenbart, bei dem das aufzubauende Werkstück kippbar in einem Pulverbett angeordnet werden kann.

Aufgabe der Erfindung ist es, ein Verfahren zur additiven Fertigung eines Bauteils bereitzustellen, in welchem die geschilderten Nachteile überwunden bzw. zumindest verringert werden.

Vor diesem Hintergrund betrifft die Erfindung ein Laserschmelzverfahren zur additiven Fertigung eines Bauteils umfassend eine oder mehrere Sequenzen einer schichtweisen Auftragung von Material auf eine in einem Arbeitsbereich befindliche Plattform, wobei vor Beginn einer ersten Sequenz eine Basissegmentplatte lösbar im Arbeitsbereich auf der Maschinengrundplatte angeordnet wird, wobei eine erste Materialschicht direkt auf eine Seite der Basissegmentplatte aufgetragen und mit dieser verbunden wird, und wobei die Basissegmentplatte einen Bestandteil des fertigen Bauteils darstellt.

Es ist also vorgesehen, dass die Materialschichten auf eine Basissegmentplatte aufgetragen werden, die selbst einen Teil des fertigen Bauteils darstellt und nicht mehr abgetrennt wird. Die Basissegmentplatte liegt vorzugsweise waagrecht im Arbeitsbereich. Die Basissegmentplatte wird nach Auftragung der gewünschten Materialschichten aus dem Arbeitsbereich gelöst und bildet gemeinsam mit den aufgetragenen Materialschichten das Bauteil. Es ist nicht erforderlich, das Bauteil nach dessen Fertigstellung von der Plattform zu schneiden.

Erfindungsgemäß handelt es sich bei dem Verfahren um ein Pulverbettverfahren und vorzugsweise selektives Laserschmelzverfahren, welches eine oder mehrere Sequenzen einer wiederholten chronologisch gestaffelten Ausführung der folgenden Schritte umfasst: (a) Auftragung einer oberflächlichen Schicht rieselfähigem Pulver in einen Arbeitsbereich oberhalb einer Plattform; und (b) Verbindung der Granulate der in Schritt (a) aufgetragenen Schicht entlang eines vorgegebenen Verlaufs, der einer Schnittkontur des Bauteils entspricht. Die Verbindung erfolgt erfindungsgemäß anhand einer Laserbestrahlung.

In dieser Ausführungsvariante ist also vorgesehen, dass vor Beginn eines ersten Satzes einer wiederholten chronologisch gestaffelten Ausführung der Schritte (a)-(b) eine Basissegmentplatte lösbar im Arbeitsbereich angeordnet wird, wobei in einer anschließenden ersten Ausführung des Schrittes (a) eine erste Schicht an Pulver direkt auf eine Seite der Basissegmentplatte aufgetragen wird und in einer darauffolgenden ersten Ausführung des Schrittes (b) die Granulate dieser ersten Schicht nicht nur miteinander, sondern auch mit der einen Seite der Basissegmentplatte verbunden werden, und wobei die Basissegmentplatte einen Bestandteil des fertigen Bauteils darstellt.

Bei den verwendeten Materialien kann es sich typischerweise um metallische Granulate oder Pulver handeln, die durch Laserbestrahlung einer geeigneten Leistung verschmolzen werden. Entsprechend erfolgt auch die Verbindung des Pulvers mit der Basissegmentplatte durch Laserschmelzen. In einer bevorzugten Variante des Verfahrens werden die Pulver im Rahmen des Schrittes (a) aus einem Reservoir auf die Basissegmentplatte bzw. auf eine bestehende Schicht der Granulate bzw. des entstehenden Bauteils transferiert. Die Plattform ist typischerweise in einer nach oben offenen Arbeitswanne angeordnet, sodass die zuletzt aufgetragene Pulverschicht eine oberflächliche Schicht in der Arbeitswanne darstellt.

Bei dem Reservoir kann es sich um eine Versorgungswanne mit höhenverstellbarem Boden handeln, die beispielsweise neben einer die Plattform aufnehmenden Arbeitswanne angeordnet und von dieser durch einen Überlauf getrennt ist. Alternativ kommen Verfahren zum Einsatz, bei denen das Pulverreservoir auf dem Beschichterschlitten angeordnet ist.

In einer Ausführungsform ist die Plattform höhenverstellbar und wird zwischen der Auftragung zweier Materialschichten um ein Inkrement abgesenkt, welches der Dicke der zuvor aufgetragenen Materialschicht entspricht. Beispielsweise kann die Plattform zwischen einem Schritt (b) und einem darauffolgenden Schritt (a) um ein Inkrement abgesenkt werden, welches der Dicke der im vorangegangenen Schritt (a) aufgetragenen Schicht entspricht.

Erfindungsgemäß ist vorgesehen, dass die Basissegmentplatte vor Beginn der ersten Sequenz bzw. eines ersten Satzes einer wiederholten chronologisch gestaffelten Ausführung der Schritte (a)-(b) anhand einer oder mehrerer zentrierenden Abstandshaltern mit Zentrierschrauben lösbar an der Oberseite der Maschinengrundplattform / -bauplatte befestigt wird. Zu diesem Zweck können an der Basissegmentplatte, welche z.B. rund, eckig oder eine von der Maschinengrundplatte unabhängige Geometrie aufweisen kann, geeignete Bohrungen vorhanden sein.

Erfindungsgemäß ist vorgesehen, dass die Basissegmentplatte nebst dem daran gebundenen Schichtaufbau nach Ende einer Sequenz im Arbeitsbereich gedreht und erneut lösbar im Arbeitsbereich angeordnet wird, bevor eine weitere Sequenz einer schichtweisen Auftragung von Material durchgeführt wird, wobei eine erste Materialschicht direkt auf die andere Seite der Basissegmentplatte aufgetragen und mit dieser verbunden wird. Erfindungsgemäß befindet sich der Schichtaufbau zwischen der Plattform und der Basissegmentplatte.

Da die Erfindung ein Pulverbettverfahren betrifft, wird die Basissegmentplatte nebst dem daran gebundenen Schichtaufbau nach Ende eines Satzes der wiederholten chronologisch gestaffelten Ausführung der Schritte (a)-(b) aus dem Arbeitsbereich gedreht und erneut lösbar im Arbeitsbereich angeordnet, bevor ein weiterer Satz einer wiederholten chronologisch gestaffelten Ausführung der Schritte (a)-(b) durchgeführt wird, wobei in einer ersten Ausführung des Schrittes (a) eine erste Schicht an Granulaten direkt auf die andere Seite der Basissegmentplatte aufgetragen wird und in einer darauffolgenden ersten Ausführung des Schrittes (b) die Granulate dieser ersten Schicht nicht nur miteinander, sondern auch mit der anderen Seite der Basissegmentplatte verbunden werden.

Die Drehung erfolgt nach Ende der ersten oder einer weiteren Sequenz bzw. eines Satzes an Schritten (a)-(b).

Die Basissegmentplatte wird vorzugsweise um 180° gedreht, damit sie nach der Drehung wieder waagrecht im Arbeitsbereich liegt. Erfindungsgemäß umfasst das Verfahren also ein beidseitiges Bedrucken der Segmentplatte. Vorzugsweise wird vor dem Drehen der Basissegmentplatte nebst dem daran gebundenen Schichtaufbau vorzugsweise nicht gebundenes Pulver zumindest teilweise aus dem Arbeitsbereich entfernt.

In einer Ausführungsform ist vorgesehen, dass nach Ende einer Sequenz bzw. eines Satzes der wiederholten chronologisch gestaffelten Ausführung der Schritte (a)-(b) ein Zusatzteil auf den Schichtaufbau aufgesetzt und mit diesen verbunden wird.

Bei dem Zusatzteil kann es sich um eine Zusatzsegmentplatte handeln. Auf die Zusatzsegmentplatte können dann entweder weitere Schichten aufgesetzt werden oder es kann sich um ein Abschlussteil handeln, welches mittels einer Abschlussschicht untrennbar mit den Schichten der vorangehenden Sequenz verbunden wird. Alternativ kann es sich bei dem Zusatzteil um ein Teil handeln, das eine mechanische Funktionalität und/oder eine Normschnittstelle umfasst. Beispielsweise können auf diese Weise komplexe mechanische Bauteile oder Normflansche in das Bauteil integriert werden.

Zum Zwecke der Anbindung des Zusatzteils können der Schichtaufbau eine oder mehrere Ausformungen und das Zusatzteil einen oder mehrere korrespondierende Durchbrüche aufweisen, wobei das Zusatzteil so auf den Schichtaufbau aufgesetzt wird, dass die Ausformungen in die Durchbrüche eingreifen, und wobei der Schichtaufbau und das Zusatzteil an der Grenzfläche zwischen den Ausformungen und der Durchbrüche verschweißt werden, beispielsweise mittels Laserbestrahlung. Alternativ oder zusätzlich zu einem Verschweißen kann ein Zusatzteil auch anderweitig befestigt werden, beispielsweise durch einen teilweisen Überbau weiterer Schichten.

Der eben beschriebene Aufsatz von Zusatzteilen kann in unterschiedlichen Varianten des Verfahrens vor und/oder nach einer Drehung der Basissegmentplatte bzw. des entstehenden Bauteils erfolgen. Zusatzteile können beidseitig bzw. auf einer oder jeder der Seiten auch mehrfach, jeweils nach einer Sequenz der Materialauftragung aufgesetzt werden.

Sofern eine Zusatzsegmentplatte vor dem Drehen der Basissegmentplatte aufgesetzt wird, kann nach dem Drehen die Zusatzsegmentplatte an Stelle der Basissegmentplatte lösbar im Arbeitsbereich befestigt werden, nämlich anhand von Zentrierschrauben und Abstandshaltern lösbar an der Oberseite der Maschinengrundplattform, wie auch im Zusammenhang mit der Basissegmentplatte beschrieben.

Bei dem im Rahmen des erfindungsgemäßen Verfahrens hergestellten Bauteils kann es sich um ein Bauteil einer Pumpe handelt, insbesondere um ein offenes oder geschlossenes Laufrad, Gehäuseteile, offene oder geschlossene Leiträder, Spalttopf oder ein Flanschrohr. Beispielsweise können eine Basissegmentplatte und eine Zusatzsegmentplatte in einem geschlossenen Laufrad die beiden Seitenwände (Trag-/Deckscheibe) darstellen, während Schaufeln zwischen den Segmentplatten und Nabenfortsätze an den Außenseiten der Segmentplatten additiv gefertigt werden. Mit selbigen Herstellungsschritten sind auch geschlossene Leiträder herstellbar.

Nach der letzten Sequenz bzw. Abfolge der Schritte (a)-(b) bzw. nach dem letzten Aufsetzen eines Zusatzbauteils kann in einer Ausführungsform noch eine Nachbearbeitung stattfinden, beispielsweise durch Schneiden, Bohren, Fräsen, Schleifen oder dergleichen, um das finale Bauteil zu erhalten.

Weitere Einzelheiten und Vorteile der Erfindung ergeben sich aus dem nachfolgend anhand der Figuren erklärten Ausführungsbeispiel. In den Figuren zeigen:
- Figur 1:: eine beispielhafte Ausgestaltung einer Vorrichtung; und
- Figur 2:: eine Darstellung von Arbeitsschritten eines erfindungsgemäßen Verfahrens zur Herstellung eines Pumpenlaufrads.

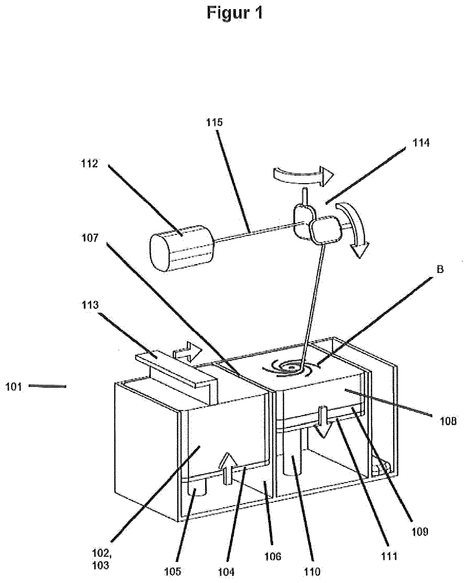

Eine beispielhafte Ausgestaltung einer Vorrichtung zur Durchführung einer erfindungsgemäßen Variante eines selektiven Laserschmelzverfahrens ist in Figur 1 dargestellt.

Die Vorrichtung 101 umfasst als Reservoir für die Pulver oder Granulate 102 eine Versorgungswanne 103 mit höhenverstellbarem Boden 104 und zugehöriger Höhenverstellvorichtung 105. Ferner umfasst die Vorrichtung 101 eine sich über eine Trennwand 106 mit Überlaufkante 107 an die Versorgungswanne 103 anschließende Fertigungswanne 108, die als Boden eine höhenverstellbare Plattform 111 mit zugehöriger Höhenverstellvorichtung 110 und die auf dem Boden/Plattform 111 montierte Maschinengrundplatte 109 aufweist.

Ferner ist ein Beschichter 113 zur Auftragung einer Pulverschicht in der Fertigungswanne 108 durch Transfer von Pulver 102 aus dem Reservoir 103 über die Überlaufkante 107 in die Fertigungswanne 108 und durch die anschließende schichtförmige Verteilung des Pulvers 102 in der Fertigungswanne 108.

Des Weiteren umfasst die Vorrichtung 101 einen Laser 112, welcher über eine frei schwenkbare Spiegeloptik 114 den Laserstrahl 115, zur Bestrahlung der obersten in der Fertigungswanne 108 liegenden Materialschicht entlang einem softwaremäßig wählbaren Verlauf, umlenkt.

Weiterhin umfasst die Vorrichtung eine in der Figur nicht dargestellte Steuereinheit, die mit der Höhenverstellvorrichtung 105 des Bodens 104 der Versorgungswanne 103, der Höhenverstellvorrichtung 110 der Plattform 111, der Beschichter 113 und mit dem Laser 112 signalverbunden ist und die ausgebildet ist, mittels dieser Aktoren ein erfindungsgemäßes Verfahren durchzuführen.

Dabei wird vor Beginn eines jeden Schrittes die Plattform 111 in der Fertigungswanne 108 um ein kleines Inkrement, beispielsweise um 0,05-0,1 mm abgesenkt. Sodann wird beschichtetes Granulat 102 mittels eines Beschichters 113 aus dem Reservoir 103 über die Überlaufkante 107 in die Fertigungswanne 108 transferiert und als Schicht aufgetragen. So entsteht eine dünne Materialschicht einer definierten Schichtstärke, beispielsweise 0,05-0,1 mm in der Fertigungswanne 108.

Anschließend wird mit dem Laser 112, Laserstrahl 115 und Spiegeloptik 114, eine Kontur einer Querschnittsebene des zuerst virtuell in CAD in Scheiben geschnittenen Bauteils B auf der Schicht abgefahren, um das Pulver zu verschmelzen.

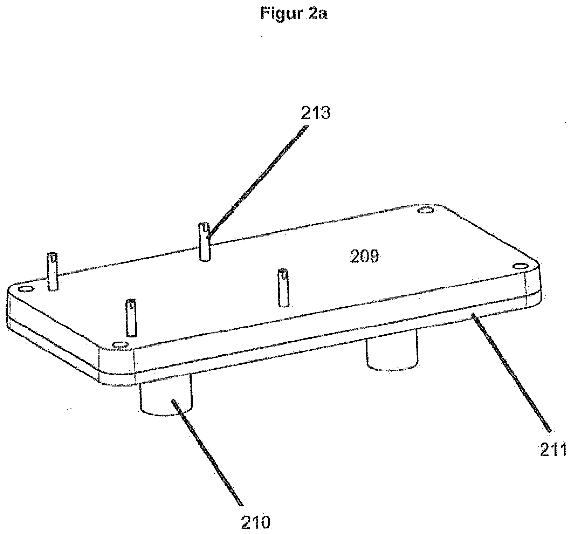

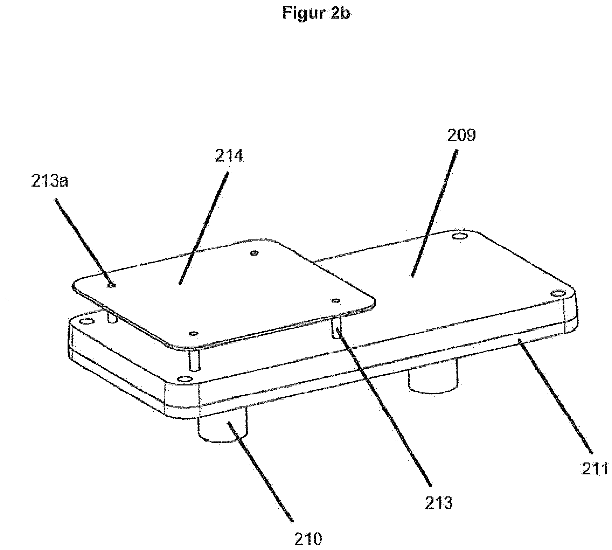

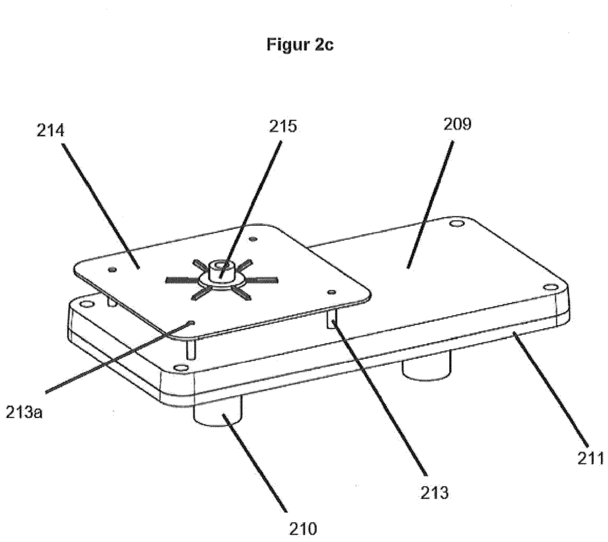

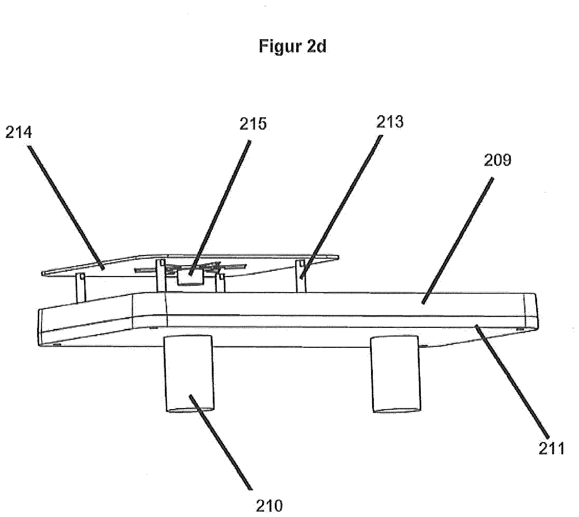

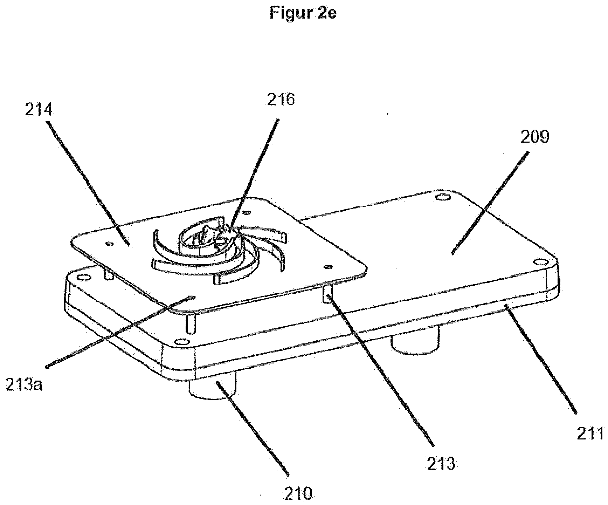

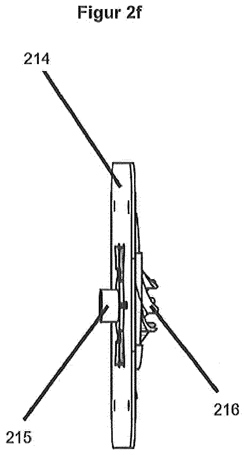

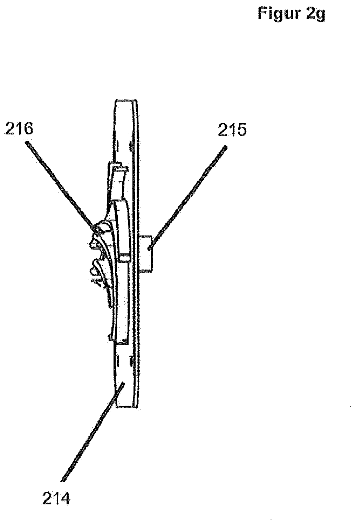

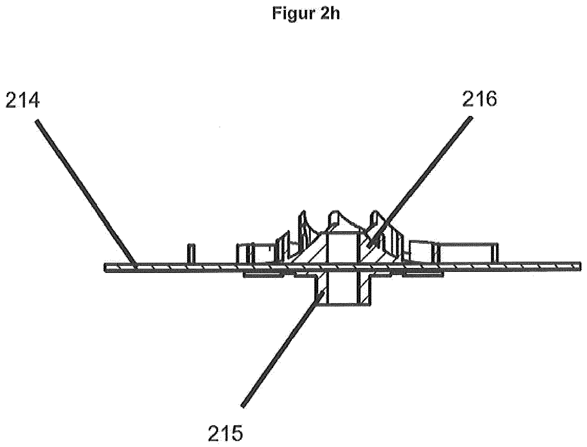

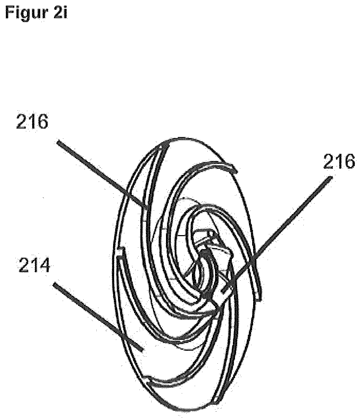

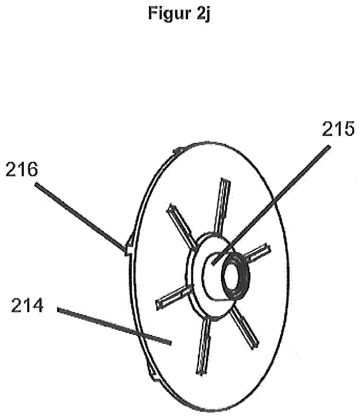

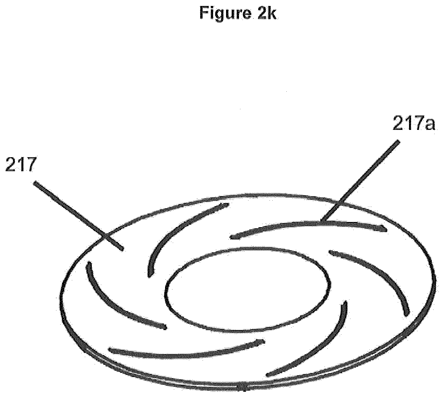

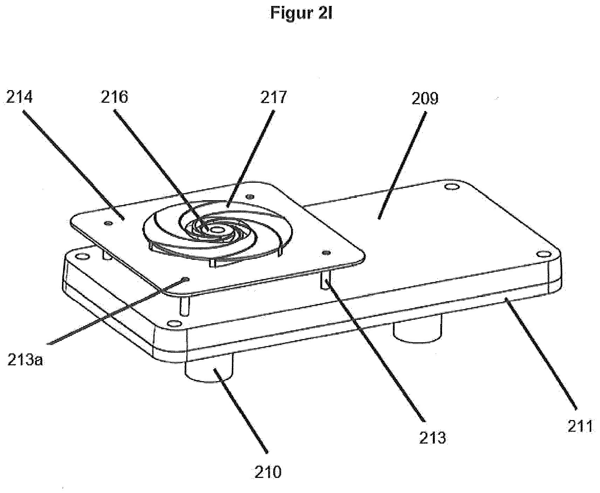

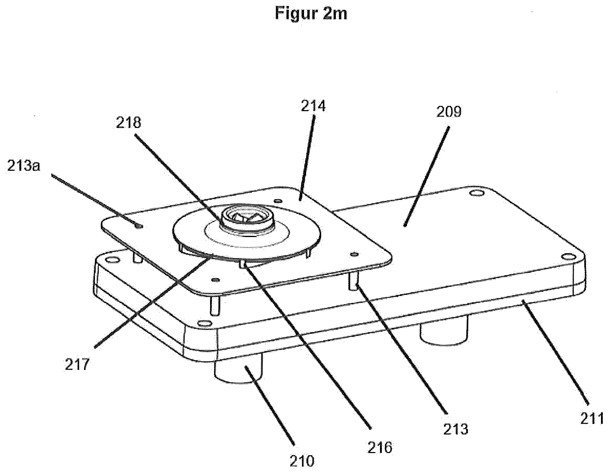

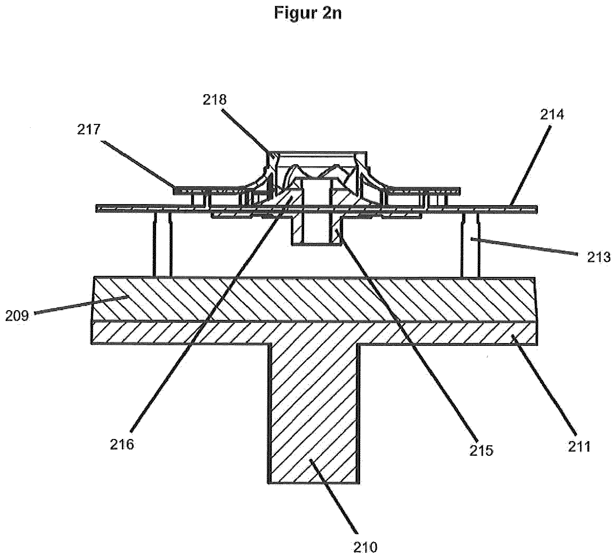

In Figur 2 wird schrittweise die Herstellung eines offenen Pumpenlaufrads anhand eines erfindungsgemäßen Verfahrens dargestellt.

In Figur 2a wird dabei zunächst eine Maschinengrundplatte 209 gezeigt, welche in Figur 1 funktionell der Maschinengrundplattform 109 entsprechen würde. Die Maschinenbauplattform 209 umfasst eine Mehrzahl an Zentrierstiften / Abstandshaltern 213, welche in entsprechende Löcher in der Maschinengrundplattform 209 eingeschraubt / gesteckt sind. In Figur 2a-n wird zusätzlich die als Boden fungierende höhenverstellbare Plattform 211 mit zugehöriger Höhenverstellvorrichtung 210 gezeigt, welche in Figur 1 funktionell der Maschinenplattform 111 und der Höhenverstellvorrichtung 110 entsprechen.

In Figur 2b wird gezeigt, dass eine Basissegmentplatte 214 in den Arbeitsraum der Maschine, nämlich oberhalb der Plattform 209 eingesetzt wird. Sie wird dort unter Verwendung von entsprechenden Befestigungsmittel 213a nämlich Schrauben oder Stifte) lösbar an den Zentrierstiften / Abstandshaltern 213, welche mit der Maschinengrundplatte 209 verbunden sind, befestigt. Die Basissegmentplatte 214 definiert die Druckebene, von der sich das Bauteil (z.B. das offene Pumpenlaufrad) in beide Richtungen aufbauen lässt. Im fertigen Pumpenlaufrad wird die Basissegmentplatte 214, welche erfindungsgemäß auch einen Teil des fertigen Bauteils darstellt, eine Tragscheibe bilden. Die Dicke der Basissegmentplatte 214 wird nach Erfordernis gewählt.

Anschließend wird der Arbeitsbereich mit Pulver befüllt und die Materialschichten werden im Rahmen eines Druckprozesses aufgetragen, um einen Schichtaufbau, im konkreten Fall einen Nabenaufbau mit Rückenschaufeln 215 zu formen, wie in Figur 2c gezeigt.

Nach Beendigung des Druckprozesses wird das Pulver grob aus dem Arbeitsbereich entfernt und die Basissegmentplatte 214 wird um 180° gedreht, sodass sich der Schichtaufbau 215 zwischen der Plattform 209 und der Basissegmentplatte 214, also an der Unterseite der Basissegmentplatte 214 befindet. Vor dem Drehen werden die Schrauben gelöst und nach dem Drehen wird die Basissegmentplatte 214 wieder unter Verwendung der Schrauben lösbar an den Zentrierstiften 213 befestigt. Der Zustand nach Ende des Drehens ist in Figur 2d gezeigt.

Im Anschluss wird der Arbeitsbereich wieder mit Pulver befüllt und Materialschichten werden im Rahmen eines zweiten Druckprozesses nun auf die andere Seite der Basissegmentplatte 214 aufgetragen, um einen weiteren Schichtaufbau, im konkreten Fall Laufradschaufeln 216 zu formen, wie in Figur 2e gezeigt.

Nach Beendigung des vorangehenden Schrittes wird ein in Figuren 2f-2h in unterschiedlichen Ansichten dargestelltes Rohbauteil erhalten, welches aus der Basissegmentplatte 214 und den aufgedruckten Elementen 215 und 216 besteht.

Durch Nachbearbeitung, vorliegend insbesondere durch Abschneiden nicht benötigter Abschnitte der Basissegmentplatte 214 und durch Vervollständigung der Achse anhand eines Durchbohrens der Basissegmentplatte 214, kann ein fertiges offenes Pumpenlaufrad erhalten werden, welches in Figuren 2i-2j in zwei unterschiedlichen Ansichten dargestellt ist.

Will man ein geschlossenes Laufrad herstellen, wäre nach dem zweiten Druckprozess bzw. im Zustand, wie er in Figur 2e gezeigt ist, eine Zusatzsegmentplatte 217 auf die Laufradschaufeln 216 aufzulegen, welche erfindungsgemäß auch einen Teil des fertigen Bauteils darstellen und im fertigen geschlossenen Pumpenlaufrad eine Deckscheibe bilden soll. Die Zusatzsegmentplatte 217 ist in Figur 2k dargestellt und ist mit Schnitten 217a versehen, durch welche die Oberkanten der Laufradschaufein 216 zumindest abschnittsweise durchragen. So kann im Falle einer aufgelegten Zusatzsegmentplatte 217, also im Zustand, wie er in Figur 2I gezeigt ist, die Zusatzsegmentplatte 217 mit den Rückenschaufeln 216 verschweißt werden.

Anschließend kann der Arbeitsbereich wieder mit Pulver befüllt bzw. Pulver nachgefüllt werden und es können weitere Materialschichten im Rahmen eines dritten Druckprozesses aufgetragen werden, um einen weiteren Schichtaufbau, im konkreten Fall einen weiteren Nabenaufbau 218 an der Außen- bzw. Oberseite der Zusatzsegmentplatte 217 zu formen, wie in Figur 2m gezeigt.

Eine Querschnittsdarstellung des erhaltenen Rohbauteils eines geschlossenen Pumpenlaufrads ist in Figur 2n dargestellt. Die Nachbearbeitung kann erfolgen, wie oben im Zusammenhang mit dem offenen Pumpenlaufrad dargestellt. (vgl. 2i; 2j) Auf diese geschilderte Art lassen sich auch diverse andere Bauteile mit Überhängen schrittweise ohne Stütze fertigen, im Pumpenbereich beispielsweise Flansche für Pumpenanschlüsse, Spalttöpfe für magnetgekoppelte Pumpen oder Leiträder für Pumpen, und ganz allgemein auch Boxen und Würfel, Stoßdämpfer oder dergleichen. Im Falle einer Box, eines Würfels oder eines Gehäuses wäre es sogar möglich, kein Pulver in das Behältnis zu füllen, was eine anschließende Pulverentfernung überflüssig machen würde. Auch das Einbringen von Normteilen, beispielsweise eines Normflansches anstelle einer Zusatzsegmentplatte oder zusätzlich zu einer Zusatzsegmentplatte wäre möglich.

Das erfindungsgemäße Verfahren hat maßgebliche Vorteile gegenüber vorbekannten Verfahren, Das Herstellen von Überhängen mittels metallischem 3D-Druck war bisher nicht oder nur unter Verwendung von Supportstrukturen möglich. Durch die Verwendung von Segmentplatten kann dies umgangen werden. Das reduziert die für den Support erforderliche Bauzeit, dass für den Support erforderliche Pulver und spart die Zeit, welche bei herkömmlich gedruckten Teilen zum Entfernen des Supports erforderlich ist.

## Patentansprüche

1. Laserschmelzverfahren zur additiven Fertigung eines Bauteils (B) umfassend eine oder mehrere Sequenzen einer schichtweisen Auftragung von Material auf eine in einem Arbeitsbereich befindliche Plattform (111, 211),
**dadurch gekennzeichnet,**
**dass** vor Beginn einer ersten Sequenz eine Basissegmentplatte (214) anhand einer oder mehrerer Zentrierschrauben (213a) lösbar über Abstandshalter (213) befestigbar im Arbeitsbereich angeordnet wird, wobei eine erste Materialschicht direkt auf eine Seite der Basissegmentplatte (214) aufgetragen und mit dieser verbunden wird, und wobei die Basissegmentplatte (214) einen Bestandteil des fertigen Bauteils (B) darstellt und die Basissegmentplatte (214) nebst dem daran gebundenen Schichtaufbau (215) nach Ende einer Sequenz aus dem Arbeitsbereich derart gedreht wird, dass sich der Schichtaufbau (215) zwischen der Plattform (209) und der Basissegmentplatte (214) befindet und erneut lösbar im Arbeitsbereich angeordnet wird, bevor eine weitere Sequenz einer schichtweisen Auftragung von Material durchgeführt wird, wobei eine erste Materialschicht direkt auf die andere Seite der Basissegmentplatte (214) aufgetragen und mit dieser verbunden wird, wobei die Sequenzen eine wiederholte chronologisch gestaffelte Ausführung der folgenden Schritte umfassen:
(a) Auftragung einer oberflächlichen Schicht rieselfähiger Granulate / Pulver (102) in einen Arbeitsbereich oberhalb einer Plattform (111, 211); und
(b) Verbindung des Pulvers (102) der in Schritt (a) aufgetragenen Schicht entlang eines vorgegebenen Verlaufs, der einer Schnittkontur des Bauteils (B) entspricht.

2. Verfahren nach Anspruch 1, **dadurch gekennzeichnet, dass** die Plattform (111, 211) höhenverstellbar ist und zwischen der Auftragung zweier Materialschichten um ein Inkrement abgesenkt wird, welches der Dicke der zuvor aufgetragenen Materialschicht entspricht.

3. Verfahren nach einem der vorhergehenden Ansprüche, **dadurch gekennzeichnet, dass** nach Ende einer Sequenz ein Zusatzteil (217) auf den Schichtaufbau aufgesetzt und mit diesen verbunden wird.

4. Verfahren nach Anspruch 3, **dadurch gekennzeichnet, dass** es sich bei dem Zusatzteil (217) um eine Zusatzsegmentplatte (217) handelt.

5. Verfahren nach einem der Ansprüche 3 oder 4, **dadurch gekennzeichnet, dass** der Schichtaufbau eine oder mehrere Ausformungen und das Zusatzteil (217) einen oder mehrere korrespondierende Durchbrüche (217a) aufweisen, wobei das Zusatzteil (217) so auf den Schichtaufbau aufgesetzt wird, dass die Ausformungen in die Durchbrüche (217a) eingreifen, und wobei der Schichtaufbau und das Zusatzteil (217) an der Grenzfläche zwischen den Ausformungen und der Durchbrüche (217a) verschweißt werden.

6. Verfahren nach einem der vorhergehenden Ansprüche, **dadurch gekennzeichnet, dass** es sich bei dem Bauteil (B) um ein Bauteil einer Pumpe handelt, insbesondere um ein offenes Laufrad, geschlossenes Laufrad, offenes Leitrad, geschlossenes Leitrad, Spalttopf oder ein Flanschrohr.

## Claims

1. Laser melting process for additively manufacturing a component (B), comprising one or more sequences of applying material in layers to a platform (111, 211) located in a work area,
**characterized**
**in that**, before the start of a first sequence, a base segment plate (214) is arranged so as to be detachably securable in the work area by means of one or more centring screws (213a) via spacers (213), wherein a first material layer is applied directly to one side of the base segment plate (214) and bonded thereto, and wherein the base segment plate (214) constitutes a constituent part of the finished component (B) and the base segment plate (214), together with the layer structure (215) attached thereto, is rotated out of the work area after the end of a sequence such that the layer structure (215) is located between the platform (209) and the base segment plate (214) and is arranged detachably in the work region again, before a further sequence of applying material in layers is carried out, wherein a first material layer is applied directly to the other side of the base segment plate (214) and bonded thereto, wherein the sequences comprise repeatedly carrying out the following steps in a manner staggered over time:
(a) applying a superficial layer of pourable granular material/powder (102) to a work area above a platform (111, 211); and
(b) bonding the powder (102) of the layer applied in step (a) along a predefined profile corresponding to a sectional contour of the component (B).

2. Method according to Claim 1, **characterized in that** the platform (111, 211) is adjustable in terms of height and, between the application of two material layers, is lowered by an increment corresponding to the thickness of the previously applied material layer.

3. Method according to either of the preceding claims, **characterized in that**, after the end of a sequence, an additional part (217) is placed onto the layer structure and bonded thereto.

4. Method according to Claim 3, **characterized in that** the additional part (217) is an additional segment plate (217) .

5. Method according to either of Claims 3 and 4, **characterized in that** the layer structure has one or more formations and the additional part (217) has one or more corresponding apertures (217a), wherein the additional part (217) is placed onto the layer structure such that the formations engage in the apertures (217a), and wherein the layer structure and the additional part (217) are welded together at the interface between the formations and the apertures (217a).

6. Method according to one of the preceding claims, **characterized in that** the component (B) is a component of a pump, in particular an open impeller wheel, closed impeller wheel, open guide wheel, closed guide wheel, separating can or a flanged pipe.

## Revendications

1. Procédé de fusion laser pour la fabrication additive d'un composant (B) comprenant une ou plusieurs séquences d'une application de matériau par couches sur une plate-forme (111, 211) se trouvant dans une zone de travail,
**caractérisé en ce que**
avant le début d'une première séquence, une plaque de segment de base (214) est agencée dans la zone de travail de manière à pouvoir être fixée de manière amovible par l'intermédiaire d'entretoises (213) à l'aide d'une ou de plusieurs vis de centrage (213a), une première couche de matériau étant appliquée directement sur un côté de la plaque de segment de base (214) et reliée à celle-ci, et la plaque de segment de base (214) faisant partie intégrante du composant fini (B) et la plaque de segment de base (214) ainsi que la structure de couches (215) qui y est reliée étant tournées hors de la zone de travail à la fin d'une séquence de telle sorte que la structure de couches (215) se trouve entre la plateforme (209) et la plaque de segment de base (214), et étant de nouveau agencée de manière amovible dans la zone de travail avant la réalisation d'une autre séquence d'une application de matériau par couches, une première couche de matériau étant appliquée directement sur l'autre côté de la plaque de segment de base (214) et reliée à celle-ci, les séquences comprenant une exécution chronologiquement échelonnée répétée des étapes suivantes :
(a) l'application d'une couche de surface de granulat/poudre fluide (102) dans une zone de travail au-dessus d'une plate-forme (111, 211) ; et
(b) la liaison de la poudre (102) de la couche appliquée à l'étape (a) le long d'un tracé prédéterminé qui correspond à un contour de coupe du composant (B).

2. Procédé selon la revendication 1, **caractérisé en ce que** la plate-forme (111, 211) est réglable en hauteur et est abaissée, entre l'application de deux couches de matériau, d'un incrément qui correspond à l'épaisseur de la couche de matériau précédemment appliquée.

3. Procédé selon l'une quelconque des revendications précédentes, **caractérisé en ce qu'**à la fin d'une séquence, une pièce supplémentaire (217) est placée sur la structure de couches et reliée à celle-ci.

4. Procédé selon la revendication 3, **caractérisé en ce que** la pièce supplémentaire (217) consiste en une plaque de segment supplémentaire (217).

5. Procédé selon l'une quelconque des revendications 3 ou 4, **caractérisé en ce que** la structure de couches présente une ou plusieurs formations en relief et la pièce supplémentaire (217) présente une ou plusieurs percées correspondantes (217a), la pièce supplémentaire (217) étant placée sur la structure de couches de telle sorte que les formations en relief s'engagent dans les percées (217a), et la structure de couches et la pièce supplémentaire (217) étant soudées à l'interface entre les formations en relief et les percées (217a).

6. Procédé selon l'une quelconque des revendications précédentes, **caractérisé en ce que** le composant (B) consiste en un composant d'une pompe, notamment une roue ouverte, une roue fermée, une roue directrice ouverte, une roue directrice fermée, un pot d'entrefer ou un tube à bride.
